# EUROPÄISCHE PATENTANMELDUNG

(11) **EP 3 446 654 A1**
(43) Veröffentlichungstag der Anmeldung: **27.02.2019**
(21) Anmeldenummer: 17187393.8
(22) Anmeldetag: 23.08.2017
(51) Int. Cl.: A61C 13/00, B28B 1/00, B29C 64/112, B33Y 10/00, B33Y 30/00, B33Y 80/00, B29L 31/00, B29C 70/72

(54) **VERFAHREN ZUR HERSTELLUNG EINER EINZELZAHNERSATZSTRUKTUR MIT EINEM 3D-DRUCKER, 3D-DRUCKER ZUR HERSTELLUNG EINER EINZELZAHNERSATZSTRUKTUR UND EINZELZAHNERSATZSTRUKTUR**

(71) Anmelder: Coltène/Whaledent AG, 9450 Altstätten (CH)
(72) Erfinder: Schaufelberger, Martin, 8872 Weesen (CH)
(74) Vertreter: Hepp Wenger Ryffel AG

(57) **Zusammenfassung**

Die vorliegende Anmeldung betrifft ein Verfahren zur Herstellung einer Einzelzahnersatzstruktur (50) oder einer Einzelzahnersatzstruktur (50) mit einer Substruktur (51), mit einem 3D-Drucker (10) umfassend mindestens einen ersten Applikator (A1) und einen Träger (T). Das Verfahren umfasst die folgenden Schritte: i. Platzieren einer Substruktur (51) auf/an dem Träger (T); ii. Materialauftrag, insbesondere Auftrag eines Kompositmaterials (K), auf die Substruktur (51) mit dem ersten Applikator (A1) aus einer ersten Richtung (r1) relativ zur Substruktur (51); iii. Rotieren der auf dem Träger (T) platzierten Substruktur (51) um eine erste Rotationsachse (a) um einen ersten Winkel (α) relativ zum ersten Applikator (A1); iv. Materialauftrag, insbesondere Auftrag eines Kompositmaterials, auf die Substruktur (51) mit dem ersten Applikator (A1) aus einer zweiten Richtung (r2) relativ zur Substruktur (51); v. optional: iteratives Wiederholen der Schritte iii und iv. Mit diesem Verfahren ergibt sich die Einzelzahnersatzstruktur (50). Weiterhin umfasst die Anmeldung einen 3D-Drucker (10) zur Herstellung einer Einzelzahnersatzstruktur (50) oder einer Einzelzahnersatzstruktur (50) mit einer Substruktur (51) und eine damit herstellbare Einzelzahnersatzstruktur (50) oder Einzelzahnersatzstruktur (50) mit einer Substruktur (51).

## Beschreibung

Die vorliegende Erfindung betrifft Verfahren zur Herstellung einer Einzelzahnersatzstruktur mit einem 3D-Drucker, 3D-Drucker zur Herstellung einer Einzelzahnersatzstruktur und Einzelzahnersatzstrukturen.

Dentale Ersatzstrukturen, insbesondere Einzelzahnersatzstrukturen, sind in der Regel komplexe Formteile. Unter einer "Einzelzahnersatzstruktur" wird hier und im Folgenden eine Zahnersatzstruktur verstanden, die für den Ersatz nur eines einzelnen Zahnes vorgesehen und geeignet ist. Beispielsweise kann eine Einzelzahnersatzstruktur eine einzelne Zahnkrone sein, die mit einem Abutment für ein Implantat verbunden sein kann. Das Abutment kann beispielsweise mit einer Implantatschraube an einem Kieferknochen befestigt werden.

Bei der Herstellung von Ersatzstrukturen muss die räumliche Konfiguration erhalten gebliebener Zahnteile, benachbarter und/oder antagonistischer Zähne, sowie jene des betroffenen Kiefers individuell berücksichtigt werden. Auch die ursprüngliche Form der ganz oder teilweise zu ersetzenden Zähne und ästhetische Aspekte dürfen nicht ausser Acht gelassen werden. Zur Herstellung von derartigen Ersatzstrukturen werden heutzutage überwiegend mehrstufige Abform- und Giessverfahren eingesetzt. Diese Verfahren haben sich in der Praxis zwar bewährt, sind jedoch mit einem hohen Fertigungsaufwand verbunden. Entsprechend wurde in jüngerer Zeit eine Reihe von Methoden entwickelt, um diesen Aufwand zu reduzieren und qualitativ hochwertigere Ersatzstrukturen im Dentalbereich bereitzustellen.

Ein Hauptaugenmerk wurde dabei auf die sogenannte digitale Fabrikation gerichtet, bei welcher dreidimensionale Gegenstände basierend auf computergenerierten Daten erzeugt werden. In diesem Zusammenhang sind einerseits subtraktive Fertigungsverfahren bekannt, bei denen ein gewünschtes Formteil durch datengesteuertes Fräsen aus vollem Material gefertigt wird. Dies führt jedoch zwangsläufig zu erheblichem Materialaufwand. Zudem muss der anfallende Abfall in der Folge entsorgt oder aufwendig wieder aufbereitet werden.

Allerdings wurden auch additive Fabrikationsverfahren entwickelt, bei denen ein Formteil aus einem oder mehreren Grundwerkstoffen aufgebaut wird. Eine besondere Stellung nimmt in diesem Zusammenhang der sogenannte 3D-Druck ein. 3D-Drucker haben den Vorteil, dass sie nur so viel Material einsetzen, wie tatsächlich benötigt wird. Dies bietet insbesondere bei der Herstellung von Formteilen in kleinen Stückzahlen, wie es bei der Fertigung von dentalen Ersatzstrukturen der Regelfall ist, einen erheblichen Vorteil.

Mit 3D-Druck werden allgemein alle Herstellungsverfahren bezeichnet, welche ein Bauteil durch schichtweises Aneinanderfügen von Materialportionen aufbauen. Es sind heute viel unterschiedliche 3D-Druckverfahren bekannt. Einige Verfahren verwenden Licht oder Laser, um geometrische Strukturen aus einem photosensitiven Harz zu verfestigen. Dazu gehören z.B. die Stereolithographie (STL) oder das Direct Light Processing (DLP) .

Die Verwendung von Druckköpfen, wie sie ähnlich im konventionellen Tintenstrahldruck eingesetzt werden, ist bekannt. Dabei werden photosensitive und niedrigviskose Flüssigkeiten als Tröpfchen schichtweise abgelegt und mittels Bestrahlung ausgehärtet. Die Verfahren werden z.B. je nach Equipment des Herstellers als Multi Jet Modelling (MJM) oder Polyjet Printing (PJP) bezeichnet.

In einer Abwandlung davon kann eine photosensitive Flüssigkeit (Tinte, Binder) in ein Pulverbett gespritzt werden, um Pulverpartikel gezielt zu verkleben und schichtweise zu einem Bauteil zu verbinden. Ein Beispiel dafür ist das sogenannte ColorJet Printing (CJP). Entweder ist der Binder selbst eingefärbt oder Binder und Farbpigmente werden mittels unterschiedlicher Düsen abgelegt. In anderen Verfahren wird eine viskose Flüssigkeit als Strang extrudiert und dieser schichtweise auf eine Bauplattform deponiert. Bei dem eingesetzten Material kann es sich um ein geschmolzenes polymerbasiertes Material handeln oder um eine Paste aus einer Flüssigkeit/Harz-Feststoff Mischung. Die Aushärtung des Bauteils kann bei der Verwendung von Thermoplasten durch Phasenumwandlung (Erstarren) oder bei der Verwendung von Harzsystemen durch Bestrahlung mit Photoinitiatoren erfolgen. Beispiele sind das Fused Deposition Modelling (FDM) oder 3D Plotting.

Die Oberflächenrauigkeit ist als Folge der Schichtung je nach dem verwendeten Verfahren sehr unterschiedlich. Die meisten Verfahren verlangen eine Nachbehandlung, wie z.B. das Entfernen von Hilfsmaterial/Stützmaterial. Abhängig von der Qualität des Hilfsmaterials kann dieses durch Ausschmelzen, mechanisches Abbrechen oder Strahlen oder durch Lösen in einem Bad erfolgen.

Andere mögliche Nachbehandlungen sind bei photosensitiven Harzen eine Nachhärtung mit Licht und/oder Wärme, Harzinfusion zum Schliessen von Poren, oder Lackieren.

Für dentale Anwendungen werden heute bereits verschieden Verfahren eingesetzt, z.B. SLM für Metallgerüste von herausnehmbaren Prothesen, MJM für Modelle und Bohrschablonen und STL für Provisorien.

Die Herstellung von Einzelzahnersatzstrukturen gestaltet sich allerdings in vielen Situationen als schwierig, beispielsweise wenn ein Kompositmaterial, aus dem eine Einzelzahnersatzstrukturen wie etwa eine einzelne Zahnkrone gebildet werden soll, auf ein als Substruktur dienendes Abutment aufgetragen werden soll. Es genügt dann nämlich nicht, das Kompositmaterial um einen Aussenumfang des Abutments herum aufzutragen. Vielmehr muss das Kompositmaterial auch in Richtung einer Längsachse des Abutments zumindest teilweise über das Abutment hervorstehen. Daher muss bei den bekannten Verfahren das Material aus verschiedenen Richtungen auf das Abutment aufgetragen werden, unter anderem aus einer horizontalen Richtung. Da die Erdanziehung dann aber das aus einer Düse eines Applikators austretende Material aus einer geraden Bahn herauslenkt, ist dieser Auftrag sehr unpräzise. Bei Materialien mit vergleichsweise hohen Viskositäten kann ein Auftrag aus einer horizontalen Richtung ebenfalls problematisch sein.

Es ist daher eine Aufgabe der vorliegenden Erfindung, die Nachteile des Standes der Technik zu überwinden. Insbesondere soll ein Verfahren zur Herstellung einer Einzelzahnersatzstruktur bereitgestellt werden, in dem das aufgetragene Material, insbesondere ein Material mit einer vergleichsweise hohen Viskosität, präzise aus mehreren Richtungen in Bezug auf eine Substruktur, insbesondere auf ein Abutment, aufgetragen werden kann.

Diese Aufgabe wird zum einen gelöst durch ein Verfahren zur Herstellung einer Einzelzahnersatzstruktur oder einer Einzelzahnersatzstruktur mit einer Substruktur mit einem 3D-Drucker umfassend mindestens einen ersten Applikator und einen Träger. Das Verfahren umfasst erfindungsgemäss die folgenden Schritte:
i. Platzieren einer Substruktur auf/an dem Träger;
ii. Materialauftrag, insbesondere Auftrag eines Kompositmaterials, auf die Substruktur mit dem ersten Applikator aus einer ersten Richtung relativ zur Substruktur;
iii. Rotieren der auf dem Träger platzierten Substruktur um eine erste Rotationsachse um einen ersten Winkel relativ zum ersten Applikator;
iv. Materialauftrag, insbesondere Auftrag eines Kompositmaterials, auf die Substruktur mit dem ersten Applikator aus einer zweiten Richtung relativ zur Substruktur;
v. optional: iteratives Wiederholen der Schritte iii und iv.

Das Verfahren wird derart durchgeführt, dass sich die Einzelzahnersatzstruktur ergibt.

Das aufgetragene und optional anschliessend ausgehärtete Material bildet die Einzelzahnersatzstruktur. Wie oben bereits erläutert wurde, kann die Substruktur beispielsweise durch ein Abutment für ein Implantat gebildet sein, und das darauf aufgetragene Material kann zur Bildung einer einzelnen Zahnkrone vorgesehen sein, die die Einzelzahnersatzstruktur bildet.

Diese erfindungsgemässe Abfolge der Verfahrensschritte erlaubt es auf einfache Weise, Material aus zwei verschiedenen Richtung relativ zur Substruktur aufzutragen, nämlich im Schritt ii aus einer ersten Richtung relativ zur Substruktur und später im Schritt iv aus einer zweiten Richtung relativ zur Substruktur. Es muss also nicht zwingend der erste Applikator verschwenkt werden, um Material aus zwei verschiedenen Richtungen relativ zur Substruktur aufzutragen; stattdessen genügt es, wenn im Schritt iii der Träger zusammen mit der darauf platzierten Substruktur rotiert. Natürlich ist bevorzugt die zweite Richtung relativ zur Substruktur von der ersten Richtung relativ zur Substruktur verschieden. Es ist möglich, dass die erste Richtung und die zweite Richtung relativ zu einem ortsfesten Bezugssystem, beispielweise relativ zu einem Gehäuse eines 3D-Druckers, übereinstimmen. Insbesondere können, wie weiter unten noch erläutert wird, die erste Richtung und die zweite Richtung in einem ortsfesten Bezugssystem beide in Richtung der Erdanziehung ausgerichtet sein. Auf diese Weise wird ein präziser Materialauftrag, insbesondere eines Materials mit einer vergleichsweise hohen Viskosität, aus verschiedenen Richtungen relativ zur Substruktur erheblich vereinfacht.

Um die notwendige Festigkeit und Steifigkeit für die Aufnahme von auftretenden Kaukräften, für eine ausreichende Abrasionsbeständigkeit und für eine vernünftige Lebensdauer der Einzelzahnersatzstruktur zu erfüllen, ist es bevorzugt, wenn das aufgetragene Material ein Kompositmaterial ist. Das Kompositmaterial kann, wie in der internationalen Patentanmeldung PCT/EP2016/054750 offenbart, eine aushärtbare, insbesondere lichtaushärtbare, Matrix enthalten sowie Füllstoffe, die bevorzugt eine maximale Partikelgrösse von 5 µm aufweisen. Das dentale Kompositmaterial kann im nicht ausgehärteten Zustand eine Viskosität im Bereich von 1 bis 10'000 Pa*s, bevorzugt von 10 bis 2'000 Pa*s, besonders bevorzugt 50 bis 800 Pa*s aufweisen. Auf diese Weise wird ein Verstopfen einer Düse des ersten Applikators weitestgehend ausgeschlossen, was insbesondere ein kontinuierliches 3D-Drucken ermöglicht. Das Kompositmaterial kann alternativ oder zusätzlich eine oder mehrere der Eigenschaften aufweisen, die in der oben genannten internationalen Patentanmeldung PCT/EP2016/054750 offenbart sind; und/oder es kann mit einem der dort offenbarten Verfahren hergestellt werden; und/oder es kann aus einer der dort offenbarten Kartuschen aufgetragen werden.

Vorteilhafterweise werden die Schritte ii bis iv, insbesondere die Schritte ii bis v, kontinuierlich ausgeführt. Dies erlaubt einen schnellen und gleichmässigen Materialauftrag. Beispielsweise kann der Träger kontinuierlich um die erste Rotationsachse rotieren. Die Schritte ii und iii und/oder die Schritte iii und iv können vorteilhafterweise auch zumindest teilweise gleichzeitig durchgeführt würde. So kann beispielsweise der Träger kontinuierlich um die erste Rotationsachse rotieren, und gleichzeitig kann der Materialauftrag auf die Substruktur erfolgen.

Vor Schritt ii kann das Verfahren zusätzlich den folgenden Schritt umfassen:
ia. Auftragen einer Verbindungsschicht auf der Substruktur und/oder Konditionierung der Substruktur.

Bei der Verbindungsschicht kann es sich beispielsweise um einen Haftvermittler handeln, der die Haftung zwischen Substruktur und aufgetragenem Material erleichtert. Der Haftvermittler kann beispielsweise mit polymerisationsfähigen Funktionalitäten versehen sein. Er kann Monomere enthalten, die einerseits über reaktive Gruppen an die Oberfläche der Substruktur und/oder an das aufgetragene Material anbinden können und die andererseits über polymerisierbare Gruppen verfügen, welche die Copolymerisation mit weiteren Monomeren ermöglichen. Die polymerisierbaren Gruppen können zu einem späteren Zeitpunkt mit der Substruktur und/oder dem aufgetragenen Material durch geeignete Verfahren copolymerisiert werden. Auf diese Weise kann ein dauerhafter, durch kovalente oder ionischen Bindungen gekennzeichneter Verbund zwischen Substruktur und aufgetragenem Material geschaffen werden. Als Haftvermittler kann beispielsweise das Produkt "OneCoat 7 Universal" verwendet werden, erhältlich von der Anmelderin Coltene/Whaledent AG, CH-9450 Altstätten, welches unter anderem für Abutments aus Titan und auch solche aus Zirkonoxid geeignet ist. Eine Konditionierung, beispielsweise durch Plasmabehandlung oder Aufrauen, kann ebenfalls einer erhöhten Haftung zwischen Substruktur und aufgetragenem Material dienen. Ein Aufrauen kann zum Beispiel durch Schleifen, etwa mit einem Schleiftuch, oder durch Sandstrahlen erreicht werden, wofür beispielsweise Abrasivkörner aus Korund verwendet werden können.

Bevorzugt ist die erste Rotationsachse rechtwinkelig zur ersten Richtung des Materialauftrags ausgerichtet. Dies ermöglicht einen Materialauftrag in einer Umfangsrichtung bezüglich der ersten Rotationsachse. Besonders bevorzugt ist die erste Rotationsachse horizontal ausgerichtet. Dann nämlich kann der Materialauftrag in Richtung der Erdanziehung erfolgen, was zu einem besonders präzisen Auftrag führt, insbesondere wenn ein Material mit einer vergleichsweise hohen Viskosität aufgetragen wird.

In einigen Ausführungsformen kann das Verfahren ferner die folgenden Schritte umfassen:
vi. Rotieren der auf dem Träger platzierten Substruktur um eine zweite Rotationsachse um einen zweiten Winkel relativ zum ersten Applikator;
vii. Materialauftrag, insbesondere Auftrag eines Kompositmaterials, auf die Substruktur mit dem ersten Applikator aus einer dritten Richtung relativ zur Substruktur.

Insbesondere wenn die zweite Rotationsachse von der ersten Rotationsachse verschieden ist, können hierdurch weitere Richtungen relativ zur Substruktur erreicht werden - insbesondere Richtungen relativ zur Substruktur, die ausserhalb einer Ebene liegen, die von der ersten Richtung und der zweiten Richtung aufgespannt wird. Dies erweitert nochmals erheblich den Bereich der Richtungen relativ zur Substruktur, in denen der Materialauftrag erfolgen kann, und zwar selbst dann, wenn der erste Applikator nicht verschwenkt wird.

Zu diesem Zweck ist es bevorzugt, wenn die zweite Rotationsachse rechtwinkelig zur ersten Rotationsachse ausgerichtet ist und wenn insbesondere der zweite Winkel der Rotation um die zweite Rotationsachse 90° beträgt. Diese Ausrichtung erlaubt auch eine einfache Bauform und eine vergleichsweise einfache Festlegung von Koordinaten, die zur Durchführung des Verfahrens und auch zur vorangehenden Programmierung eines 3D-Druckers verwendet werden.

Besonders bevorzugt ist die zweite Rotationsachse vertikal ausgerichtet. Denn wenn zusätzlich die erste Rotationsachse horizontal ausgerichtet ist, kann zunächst an einem Aussenumfang der Substruktur Material in Richtung der Erdanziehung aufgetragen werden, anschliessend kann eine Rotation um die zweite Rotationsachse um 90° erfolgen, und danach kann auf einer Oberseite der Substruktur und/oder auf einer zum Aussenumfang senkrechten Oberseite des bereits aufgetragenen Materials weiteres Material aufgetragen werden, und zwar wiederum in Richtung der Erdanziehung.

Wenn beispielsweise die Einzelzahnersatzstruktur eine Einzelzahnkrone ist und die Substruktur ein Abutment, so kann es vorteilhaft sein, wenn ein Materialauftrag nur auf einen Teil der Oberseite der Substruktur erfolgt. Insbesondere kann entlang einer Längsachse eines Abutments ein Zugangskanal freigelassen werden, durch den beim späteren Implantieren eine Implantatschraube geführt werden kann. Alternativ kann ein solcher Zugangskanal nach dem Auftragen des Materials in die Einzelzahnersatzstruktur eingebracht werden, beispielsweise darin eingefräst werden. In beiden Varianten kann der Zugangskanal nach dem Implantieren gefüllt werden.

Optional kann der Träger mit der Substruktur auch im Schritt vii um eine Rotationsachse rotieren. Alternativ oder zusätzlich kann im Schritt vii der Applikator A1 bewegt werden.

Alternativ zum Rotieren der auf dem Träger platzierten Substruktur um eine zweite Rotationsachse um einen zweiten Winkel relativ zum ersten Applikator kann das Verfahren ferner den folgenden Schritt umfassen:
vi. Materialauftrag, insbesondere Auftrag eines Kompositmaterials, auf die Substruktur mit einem zweiten Applikator aus einer dritten Richtung relativ zur Substruktur. Aufgrund des zweiten Applikators kann also auf eine zweite Rotationsachse verzichtet werden, und trotzdem ist ein Materialauftrag aus einer dritten Richtung relativ zur Substruktur möglich. Bei entsprechender Ausrichtung kann die dritte Richtung relativ zur Substruktur von der ersten Richtung relativ zur Substruktur und der zweiten Richtung relativ zur Substruktur verschieden sein. Insbesondere kann die dritte Richtung des Materialauftrags rechtwinkelig zur ersten Richtung und zur zweiten Richtung ausgerichtet sein. Dies ermöglicht es nämlich beispielsweise, mit Hilfe des ersten Applikators Material auf einen Aussenumfang einer Substruktur aufzutragen und dann mit Hilfe des zweiten Applikators Material auf der Oberseite der Substruktur und/oder auf einer Oberseite des bereits aufgetragenen Materials aufzutragen. In einigen Ausführungsformen, in denen auf eine zweite Rotationsachse verzichtet wird, kann ein Auftrag aus einer nicht vertikalen Richtung, insbesondere aus einer horizontalen Richtung erfolgen. Dies kann aber beispielsweise dann in Kauf genommen werden, wenn ein Material mit einer vergleichsweise geringen Viskosität aufgetragen wird, beispielsweise durch Aufsprühen.

Aus den bereits oben erwähnten Gründen ist es vorteilhaft, wenn die erste, die zweite und die dritte Richtung des Materialauftrags in Richtung der Erdanziehung ausgerichtet sind, denn so wird ein präziser Materialauftrag erheblich vereinfacht, insbesondere im Falle eines Materials mit einer vergleichsweise hohen Viskosität.

Das mit dem ersten und/oder (falls vorhanden) dem zweiten Applikator aufgetragene Material kann beispielsweise auf an sich bekannte Weise mit einem fokussierten Lichtstrahl und/oder einem Laserstrahl ausgehärtet werden. Hierdurch kann für eine präzise Aushärtung und damit Formgebung gesorgt werden.

Besonders vorteilhaft ist es, wenn durch zumindest einen Unterschnitt eine formschlüssige Verbindung zwischen der Substruktur und der Einzelzahnersatzstruktur erstellt wird, also beispielsweise zwischen einem Abutment und einer aus einem Kompositmaterial hergestellten einzelnen Zahnkrone. Durch herkömmliche Verfahren hergestellte dentale Ersatzstrukturen werden nämlich in der Regel auf die Substruktur geschoben und verklebt. Dazu muss die Substruktur beispielsweise konisch ausgebildet sein, um ein Überstülpen der dentalen Ersatzstruktur zu ermöglichen. Das Wegfallen der Konizitätsanforderung gewährt zusätzliche Freiheit bei der Gestaltung dentaler Einzelzahnersatzstrukturen.

Die Substruktur kann ausgewählt sein aus einer Gruppe bestehend aus dentalen Gerüststrukturen, insbesondere aus Unterstrukturen für Brücken oder Stege, Abutments für Implantate oder Sekundärteilen; metallischen oder keramischen Werkstücken; oder dentalen Aufbauten mit keramischen, insbesondere gefrästen oder gegossenen, Kronen.

Im erfindungsgemässen Verfahren können mit dem mindestens einen Applikator nacheinander verschiedene Materialen aufgetragen werden. Beispielsweise kann mit einem Applikator zunächst ein erstes Material auftragen und mit demselben Applikator später ein zweites Material. Alternativ kann mit einem ersten Applikator ein erstes Material aufgetragen werden und mit einem zweiten Applikator ein zweites Material. Das erste und das zweite Material können sich beispielsweise in ihren Härten im ausgehärteten Zustand und/oder ihren optischen Eigenschaften im ausgehärteten Zustand unterscheiden, wie etwa in der Farbe und/oder der Transparenz. Beispielsweise kann ein erstes Material im Inneren der Einzelzahnersatzstruktur zur Nachbildung des Dentins dienen und ein zweites Material an der Oberfläche der Einzelzahnersatzstruktur zur Nachbildung des Zahnschmelzes.

Ein weiterer Aspekt der Erfindung betrifft einen 3D-Drucker zur Herstellung einer Einzelzahnersatzstruktur oder einer Einzelzahnersatzstruktur mit einer Substruktur mit einem wie oben beschriebenen Verfahren. Der 3D-Drucker umfasst mindestens einen ersten Applikator und einen Träger. Erfindungsgemäss enthält der 3D-Drucker Mittel zur Rotation des Trägers um eine erste Rotationsachse relativ zum ersten Applikator. Mit einem solchen 3D-Drucker lässt sich also das oben beschriebene Verfahren durchführen, und es lassen sich die ebenfalls oben erläuterten Vorteile erreichen.

Für einige der oben beschriebenen Ausführungsformen des Verfahrens ist es vorteilhaft, wenn der 3D-Drucker Mittel zur Rotation des Trägers um eine zweite Rotationsachse relativ zum ersten Applikator aufweist, wobei die zweite Rotationsachse vorzugsweise rechtwinkelig zur ersten Rotationsachse ausgerichtet ist. Auch damit lassen sich die bereits oben erläuterten Vorteile erzielen.

Die Mittel zur Rotation des Trägers um die erste und/oder zweite Rotationsachse sind bevorzugt ausgewählt aus Servomotoren und Schrittmotoren. Mit derartigen Motoren kann die Rotation des Trägers besonders präzise gesteuert werden.

Ein weiterer Aspekt der Erfindung betrifft eine Einzelzahnersatzstruktur oder Einzelzahnersatzstruktur mit einer Substruktur, welche nach einem erfindungsgemässen Verfahren herstellbar ist.

Im Folgenden wird die Erfindung anhand von Ausführungsbeispielen und Zeichnungen näher erläutert, die jedoch den Gegenstand der Erfindung nicht einschränken. Dabei zeigen, jeweils in schematischen Darstellungen,
- Figur 1a:: in einer Schnittansicht einen Schritt eines ersten erfindungsgemässen Verfahrens, in dem ein Träger mit einer Substruktur um eine erste, horizontale Rotationsachse rotiert und in dem aus einem Applikator ein Kompositmaterial auf einen Aussenumfang eines Abutments aufgetragen wird;
- Figur 1b:: in einer Schnittansicht einen Zeitpunkt des ersten erfindungsgemässen Verfahrens, in dem das Kompositmaterial auf einen Aussenumfang des Abutments aufgetragen wurde;
- Figur 1c:: in einer Schnittansicht einen weiteren Schritt des ersten erfindungsgemässen Verfahrens, in dem nach einer Rotation des Trägers mit der Substruktur um eine zweite, vertikale Rotationsachse aus dem Applikator Kompositmaterial auf eine Oberseite des bereits aufgetragenen Kompositmaterials und auf eine Oberseite des Abutments aufgetragen wird;
- Figur 1d:: die fertige Einzelzahnersatzstruktur;
- Figur 2:: die implantierte Einzelzahnersatzstruktur gemäss Figur 1d;
- Figur 3a:: in einer Schnittansicht einen Schritt eines zweiten erfindungsgemässen Verfahrens, in dem ein Träger mit einer Substruktur um eine erste, horizontale Rotationsachse rotiert und in dem aus einem ersten Applikator ein Kompositmaterial auf einen Aussenumfang eines Abutments aufgetragen wird;
- Figur 3b:: in einer Schnittansicht einen weiteren Schritt des zweiten erfindungsgemässen Verfahrens, in dem aus einem zweiten Applikator Kompositmaterial auf eine Oberseite des bereits aufgetragenen Kompositmaterials und auf eine Oberseite des Abutments aufgetragen wird.

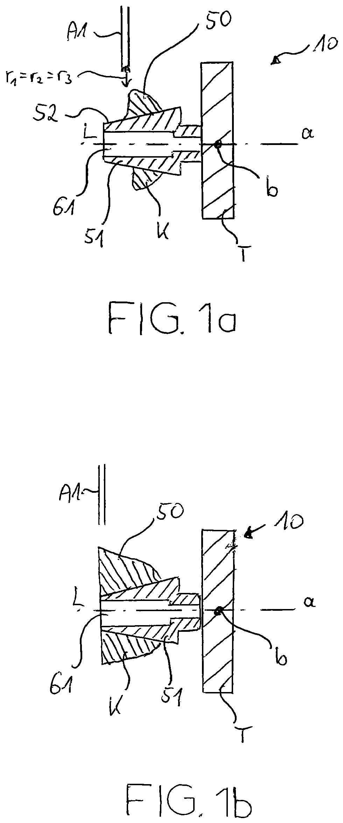

Der in den Figuren 1a und 1b gezeigte 3D-Drucker 10 enthält einen Applikator A1 und einen Träger T. Der Träger T ist mit Hilfe eines hier nicht dargestellten Servomotors oder Schrittmotors um eine erste, horizontal verlaufende Rotationsachse a relativ zum Applikator A1 rotierbar. In einem vorangehenden ersten Schritt i wurde eine als Abutment 51 ausgebildete Substruktur am Träger T platziert. Das Abutment 51 enthält eine Längsachse L, welche in der in Figur 1a dargestellten Position mit der ersten Rotationsachse a übereinstimmt, und einen sich entlang dieser Längsachse L erstreckenden Schraubenkanal 61. Anschliessend kann in einem optionalen Schritt ia eine Verbindungsschicht auf dem Abutment 51 aufgetragen werden und/oder es kann eine Konditionierung des Abutments 51 erfolgen. Die Verbindungsschicht kann beispielsweise aus dem bereits oben erwähnten Haftvermittler "OneCoat 7 Universal" bestehen.

Wie in Figur 1a gezeigt ist, wird dann in einer kontinuierlichen und gleichzeitigen Durchführung von Schritten ii bis iv das auf dem Träger T platzierte Abutment 51 um die erste Rotationsachse a relativ zum Applikator A1 gedreht, und aus dem Applikator A1 wird Kompositmaterial K auf einen Aussenumfang 52 des Abutments 51 aufgetragen. Das Kompositmaterial K kann beispielsweise eine der in PCT/EP2016/054750 offenbarten Zusammensetzungen haben.

Bei der Rotation um die erste Rotationsachse a erfolgt der Materialauftrag stets vertikal nach unten, also rechtwinkelig zur ersten Rotationsachse a und in Richtung der Erdanziehung. Dies ermöglicht einen besonders präzisen Auftrag, insbesondere wenn das Material eine vergleichsweise hohe Viskosität aufweist. Während die Richtung des Materialauftrags in einem ortsfesten Bezugssystem, also beispielweise relativ zu einem Gehäuse des 3D-Druckers 10, unverändert bleibt, ändert sich die Richtung relativ zum Abutment 51, so dass ein Materialauftrag um den Aussenumfang 52 herum stattfinden kann. Beispielhaft sind zwei Richtungen r₁ und r₂ gezeigt, die im ortsfesten Bezugssystem identisch sind.

Das mit dem Applikator A1 aufgetragene Material wird mit einem hier nicht dargestellten fokussierten Lichtstrahl und/oder einem Laserstrahl ausgehärtet. Auf diese Weise entsteht ein in Figur 1b gezeigter erster Teil einer Zahnkrone 50, die die Einzelzahnersatzstruktur bildet.

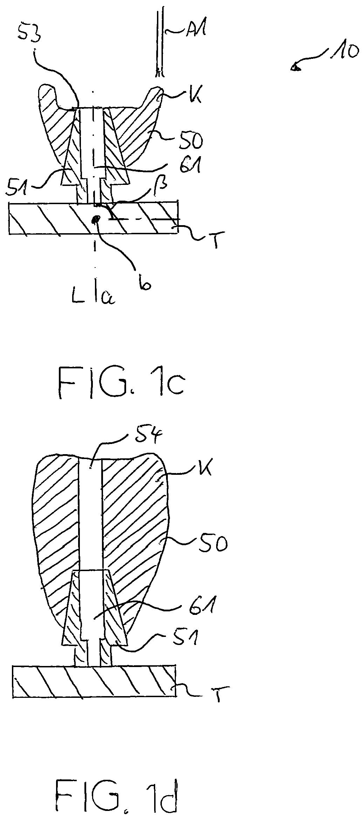

Daraufhin wird in einem Schritt vi der Träger T zusammen mit dem darauf platzierten Abutment 51 um einen zweiten Winkel β = 90° um eine zweite Rotationsachse b relativ zum Applikator A1 rotiert. Dies kann ebenfalls mit einem hier nicht dargestellten Servomotor oder Schrittmotor erfolgen. Die zweite Rotationsachse b verläuft senkrecht zur Zeichenebene, also horizontal und rechtwinkelig zur ersten Rotationsachse a. Auf diese Weise ergibt sich die in Figur 1c dargestellte Position. In dieser Position erfolgt in einem Schritt vii ein weiterer Auftrag des Kompositmaterials K auf eine Oberseite des bereits aufgetragenen Kompositmaterials K und auf einen Teil der Oberseite 53 des Abutments 51. Dabei wird entlang einer Längsachse L des Abutments 51 ein Zugangskanal 54 freigelassen, der mit dem Schraubenkanal 61 des Abutments 51 fluchtet und durch den eine Implantatschraube 55 geführt werden kann. Hierdurch wird erreicht, dass das Kompositmaterial K auch in Richtung der Längsachse L des Abutments 51 über das Abutment 51 hervorstehen kann. Dieser Auftrag geschieht in einer dritten Richtung r₃, die in einem ortsfesten Bezugssystem mit der ersten Richtung r₁ und der zweiten Richtung r₂ übereinstimmt, also ebenfalls in Richtung der Erdanziehung. Auch in dieser Richtung relativ zum Abutment 51 ist somit ein präziser Materialauftrag gewährleistet. Im Schritt vii kann der Träger T mit dem Abutment 51 ebenfalls um die nun vertikal ausgerichtete Rotationsachse a rotieren. Alternativ oder zusätzlich kann im Schritt vii der Applikator A1 bewegt werden.

Insgesamt ergibt sich mit diesem Verfahren eine in Figur 1d dargestellte Einzelzahnersatzstruktur 50 in Form einer einzelnen Zahnkrone, die mit dem Abutment 51 verbunden ist.

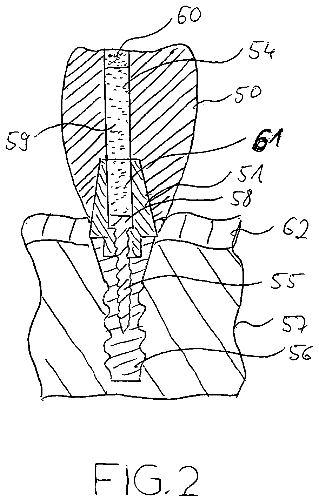

Die durch 3D-Druck hergestellte Einzelzahnersatzstruktur 50 kann anschliessend poliert werden, beispielsweise mit an sich bekannten Komposit-Poliermitteln und/oder Schleifpasten. Bevorzugt wird der subgingivale Bereich der Einzelzahnersatzstruktur 50 ebenfalls poliert, damit das Zahnhaltegewebe geschont wird. Die Einzelzahnersatzstruktur 50 mit dem Abutment 51 kann auf ein Implantat 56 aufgesteckt werden und mit einer geeigneten Implantatschraube 55, die durch den Zugangskanal 54 und den Schraubenkanal 61 geführt wird, durch Zahnfleisch 62 hindurch an einem Kieferknochen 57 befestigt werden. Der Zugangskanal 54 kann über einem Kopf 58 der Implantatschraube 55 mit einem Platzhalter 59 gefüllt werden, beispielsweise mit einem Wattekügelchen oder einem Wurzelkanalfüllmaterial wie etwa dem Produkt GuttaFlow, erhältlich von der Anmelderin Coltene/Whaledent AG, CH-9450 Altstätten. Ein oberes Ende des Zugangskanals 54, beispielsweise dessen oberen 2 bis 3 mm, können anschliessend mit einem lichthärtenden Komposit 60 gefüllt werden, wie etwa dem Produkt Brilliant Ever-Glow, ebenfalls erhältlich von der Anmelderin Coltene/Whaledent AG, CH-9450 Altstätten. Es ergibt sich dann die in Figur 2 dargestellte Situation.

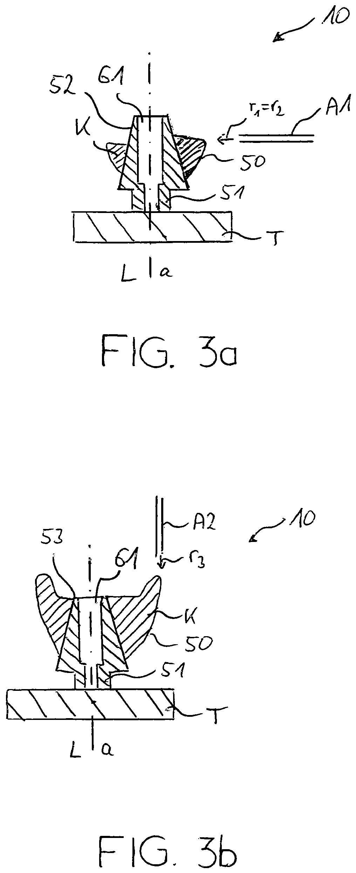

Bei dem in den Figuren 3a und 3b dargestellten zweiten erfindungsgemässen Verfahren wird ein Träger T nur um eine einzige, vertikale Rotationsachse a rotiert. Um dies zu kompensieren, werden im Gegensatz zum ersten erfindungsgemässen Ausführungsbeispiel zwei Applikatoren A1, A2 verwendet. In einem ersten Schritt i wird auch hier eine Substruktur in Form eines Abutments 51 auf dem Träger T platziert. Mit einem ersten Applikator A1 wird in einem Schritt ii ein Kompositmaterial K aus einer ersten, hier horizontalen Richtung r₁ auf einen Aussenumfang 52 des Abutments 51 aufgetragen (siehe Figur 3a). Gleichzeitig rotiert das auf dem Träger T platzierte Abutment 51 in einem Schritt iii um die genannte erste, vertikale Rotationsachse a. Dabei wird in einem Schritt iv weiterhin Kompositmaterial K auf den Aussenumfang 52 des Abutments 51 aufgetragen, und zwar weiterhin in der (relativ zu einem ortsfesten Bezugssystem) gleichen horizontalen Richtung r₂=r₁.

Anschliessend erfolgt in einem Schritt vi mit einem zweiten Applikator A2 ein Materialauftrag aus einer dritten, vertikalen Richtung r₃ relativ zum Abutment, und zwar auf eine Oberseite des bereits aufgetragenen Kompositmaterials K und auf einen Teil der Oberseite 53 des Abutments 51. Währenddessen kann der Träger T weiterhin um die horizontale Rotationsachse a rotieren. Auch hier wird entlang einer Längsachse L des Abutments 51 ein Zugangskanal freigelassen, der mit dem Schraubenkanal 61 des Abutments 51 fluchtet und durch den eine Implantatschraube 55 geführt werden kann (siehe Figur 3b).

Mit dem erfindungsgemässen Verfahren kann nicht nur ein Kompositmaterial K auf ein Abutment 51 oder eine andere Substruktur aufgetragen werden. Beispielsweise kann damit auch eine Beschichtung aufgetragen werden, etwa auf ein bereits ausgehärtetes Kompositmaterial einer Einzelzahnersatzstruktur. So kann zum Beispiel mit dem in den Figuren 3a und 3b dargestellten Verfahren eine Beschichtung auf die in Figur 1d gezeigte Einzelzahnersatzstruktur 50 aufgetragen werden. Wenn die Beschichtung eine ausreichend niedrige Viskosität aufweist, kann sie aufgesprüht werden. Ein Aufsprühen eines Materials von ausreichend niedriger Viskosität aus der horizontalen Richtung r₁ kann präzise durchgeführt werden.

## Patentansprüche

1. Verfahren zur Herstellung einer Einzelzahnersatzstruktur (50) oder einer Einzelzahnersatzstruktur (50) mit einer Substruktur (51), mit einem 3D-Drucker (10) umfassend mindestens einen ersten Applikator (A1) und einen Träger (T), wobei das Verfahren die folgenden Schritte umfasst:
i. Platzieren einer Substruktur (51) auf/an dem Träger (T);
ii. Materialauftrag, insbesondere Auftrag eines Kompositmaterials (K), auf die Substruktur (51) mit dem ersten Applikator (A1) aus einer ersten Richtung (r₁) relativ zur Substruktur (51);
iii. Rotieren der auf dem Träger (T) platzierten Substruktur (51) um eine erste Rotationsachse (a) um einen ersten Winkel relativ zum ersten Applikator (A1);
iv. Materialauftrag, insbesondere Auftrag eines Kompositmaterials (K), auf die Substruktur (51) mit dem ersten Applikator (A1) aus einer zweiten Richtung (r₂) relativ zur Substruktur (51);
v. optional: iteratives Wiederholen der Schritte iii und iv;
derart, dass sich die Einzelzahnersatzstruktur (50) ergibt.

2. Verfahren nach Anspruch 1, **dadurch gekennzeichnet, dass** die Schritte ii bis iv, insbesondere die Schritte ii bis v, kontinuierlich ausgeführt werden.

3. Verfahren nach einem der Ansprüche 1 oder 2, **dadurch gekennzeichnet, dass** das Verfahren vor Schritt ii zusätzlich den folgenden Schritt umfasst:
ia. Auftragen einer Verbindungsschicht auf der Substruktur (51) und/oder Konditionierung der Substruktur (51).

4. Verfahren nach einem der Ansprüche 1 bis 3, **dadurch gekennzeichnet, dass** die erste Rotationsachse (a) rechtwinkelig zur ersten Richtung (r₁) des Materialauftrags ausgerichtet ist.

5. Verfahren nach einem der Ansprüche 1 bis 4, **dadurch gekennzeichnet, dass** das Verfahren ferner die folgenden Schritte umfasst:
vi. Rotieren der auf dem Träger (T) platzierten Substruktur (51) um eine zweite Rotationsachse (b) um einen zweiten Winkel (β) relativ zum ersten Applikator (A1);
vii. Materialauftrag, insbesondere Auftrag eines Kompositmaterials (K), auf die Substruktur (51) mit dem ersten Applikator (A1) aus einer dritten Richtung (r₃) relativ zur Substruktur (51).

6. Verfahren nach Anspruch 5, **dadurch gekennzeichnet, dass** die zweite Rotationsachse (b) rechtwinkelig zur ersten Rotationsachse (a) ausgerichtet ist und der zweite Winkel (β) der Rotation um die zweite Rotationsachse (b) insbesondere 90° beträgt.

7. Verfahren nach einem der Ansprüche 1 bis 4, **dadurch gekennzeichnet, dass** das Verfahren ferner den folgenden Schritt umfasst:
vi. Materialauftrag, insbesondere Auftrag eines Kompositmaterials (K), auf die Substruktur (51) mit einem zweiten Applikator (A2) aus einer dritten Richtung (r₃) relativ zur Substruktur (51).

8. Verfahren nach Anspruch 7, **dadurch gekennzeichnet, dass** die dritte Richtung (r₃) des Materialauftrags rechtwinkelig zur ersten Richtung (r₁) und zur zweiten Richtung (r₂) ausgerichtet ist.

9. Verfahren nach einem der Ansprüche 1 bis 6, **dadurch gekennzeichnet, dass** die erste, die zweite und die dritte Richtung (r₁, r₂, r₃) des Materialauftrags in Richtung der Erdanziehung ausgerichtet sind.

10. Verfahren nach einem der Ansprüche 1 bis 9, **dadurch gekennzeichnet, dass** das mit einem Applikator (A1, A2) aufgetragene Material mit einem fokussierten Lichtstrahl und/oder einem Laserstrahl ausgehärtet wird.

11. Verfahren nach einem der Ansprüche 1 bis 10, **dadurch gekennzeichnet, dass** durch zumindest einen Unterschnitt eine formschlüssige Verbindung zwischen der Substruktur (51) und der Einzelzahnersatzstruktur (50) erstellt wird.

12. Verfahren nach einem der Ansprüche 1 bis 11, **dadurch gekennzeichnet, dass** die Substruktur (51) ausgewählt ist aus einer Gruppe bestehend aus dentalen Gerüststrukturen, insbesondere aus Unterstrukturen für Brücken oder Stege, Abutments für Implantate oder Sekundärteilen; metallischen oder keramischen Werkstücken; oder dentalen Aufbauten mit keramischen, insbesondere gefrästen oder gegossenen, Kronen.

13. 3D-Drucker (10) zur Herstellung einer Einzelzahnersatzstruktur (50) oder einer Einzelzahnersatzstruktur (50) mit einer Substruktur (51), mit einem Verfahren nach einem der Ansprüche 1 bis 12, umfassend mindestens einen ersten Applikator (A1) und einen Träger (T), **gekennzeichnet durch** Mittel zur Rotation des Trägers (T) um eine erste Rotationsachse (a) relativ zum ersten Applikator (A1).

14. 3D-Drucker (10) nach Anspruch 13 zur Herstellung einer Einzelzahnersatzstruktur (50) oder einer Einzelzahnersatzstruktur (50) mit einer Substruktur (51), mit einem Verfahren nach einem der Ansprüche 1 bis 5 oder 8 bis 12, **gekennzeichnet durch** Mittel zur Rotation des Trägers (T) um eine zweite Rotationsachse (b) relativ zum ersten Applikator (A1), wobei die zweite Rotationsachse (a) vorzugsweise rechtwinkelig zur ersten Rotationsachse (a) ausgerichtet ist.

15. 3D-Drucker nach einem der Ansprüche 13 oder 14, **dadurch gekennzeichnet, dass** die Mittel zur Rotation des Trägers (T) um die erste und/oder zweite Rotationsachse (a, b) ausgewählt sind aus Servomotoren und Schrittmotoren

16. Einzelzahnersatzstruktur (50) oder Einzelzahnersatzstruktur (50) mit einer Substruktur (51), herstellbar nach einem Verfahren nach einem der Ansprüche 1 bis 12.
